# EUROPÄISCHE PATENTANMELDUNG

(11) **EP 0 990 909 A1**
(43) Veröffentlichungstag der Anmeldung: **05.04.2000**
(21) Anmeldenummer: 99810842.7
(22) Anmeldetag: 20.09.1999
(51) Int. Cl.: G01N 35/10

(54) **Analyseautomat mit Mitteln zur Überwachung von Pipettiervorgängen**

(30) Priorität: 30.09.1998 EP 98810985
(71) Anmelder: F. HOFFMANN-LA ROCHE AG, 4070 Basel (CH)
(72) Erfinder: Burkhardt, Claudius, 6003 Luzern (CH); Gödl, Fritz, 6343 Rotkreuz (CH)
(74) Vertreter: AMMANN PATENTANWÄLTE AG BERN AMMANN INGENIEURS-CONSEILS EN PROPRIETE INTELLECTUELLE SA BERNE AMMANN PATENT ATTORNEYS LTD BERNE

(57) **Zusammenfassung**

Analysenautomat für die Untersuchung von flüssigen Proben, umfassend einen Pipettenarm (12) zum Entnehmen von Probenflüssigkeit aus jeweils einem Probengefäss und zum Abgeben dieser Probenflüssigkeit in eine Mischkammer oder Reaktionsküvette (14), und Mittel zum Steuern des Automaten, Sensoren zum Überwachen der Funktionen des Automaten und Mittel zum Auswerten von Überwachungsergebnissen und zum Abgeben eventueller Fehlermeldungen, wobei diese Mittel wenigstens einen programmgesteuerten Prozessor umfassen. Zur Überwachung der Pipettiervorgänge mit hoher Effizienz und Zuverlässigkeit ist das Analysenautomat, dadurch gekennzeichnet, dass darin eine Mehrzahl von Ablauf- und Überwachungssteuerungen (31 bis 35) vorgesehen sind, die in sich abgeschlossene, voneinander unabhängige Einheiten bilden, die aufgrund von Startbefehlen einer Zentralsteuerung (52) ihre Funktion beginnen und diese mit der Abgabe eines jeweiligen Modussignals (S1 bis S7) an die Zentralsteuerung (52) beenden, und dass ferner im Analysenautomat eine Kombinationslogik (54) vorgesehen ist, die mit wenigstens zwei der Ablauf- und Überwachungssteuerungen (31 bis 33, 35) verbunden ist, welche Logik jeweils fallweise von diesen Steuerungen (31 bis 33, 35) abgegebene Meldungen im Sinne eines logischen UND kombiniert und ein dem Kombinationsresultat entsprechendes Modussignal (S1 bis S7) an die Zentralsteuerung (52) abgibt, wobei in der Zentralsteuerung (52) jedem Modussignal (S1 bis S7) eine entsprechende Reaktion des Analysenautomaten (10) fest zugeordnet ist.

## Beschreibung

Die Erfindung betrifft einen Analysenautomat für die Untersuchung von flüssigen Proben, welcher Analysenautomat einen Pipettenarm zum Entnehmen von Probenflüssigkeit aus jeweils einem Probengefäss und zum Abgeben dieser Probenflüssigkeit in eine Mischkammer oder Reaktionsküvette, und Mittel zum Steuern des Automaten, Sensoren zum Überwachen der Funktionen des Automaten und Mittel zum Auswerten von Überwachungsergebnissen und zum Abgeben eventueller Fehlermeldungen, wobei diese Mittel wenigstens einen programmgesteuerten Prozessor umfassen.

Analysenautomaten der genannten Art sind bekannt.

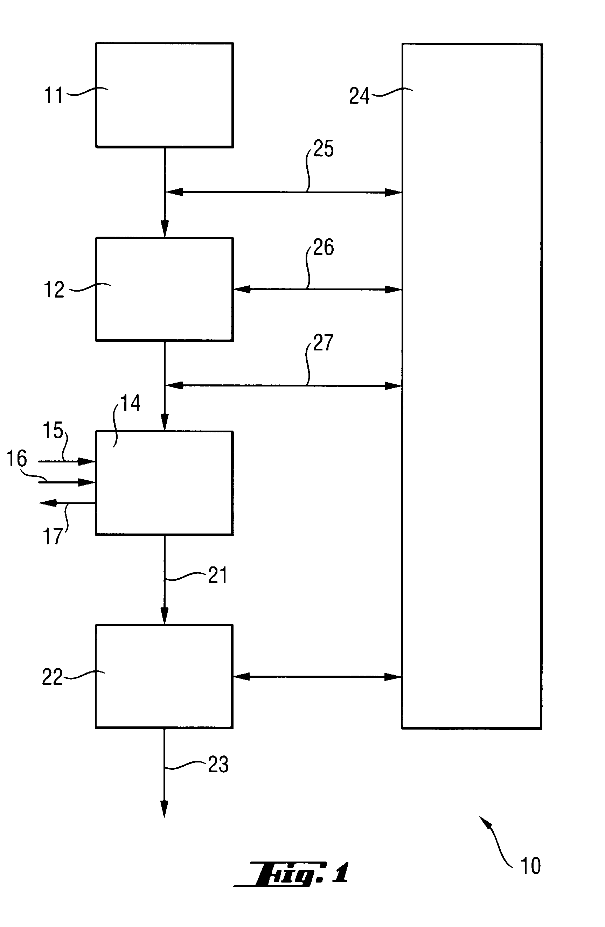

Figur 1 zeigt als Stand der Technik beispielsweise das Blockschaltbild eines Analysenautomaten 10 zur Untersuchung von flüssigen Proben biologischer Substanzen wie Blut oder Urin. Die Proben werden in separaten Gefässen auf einer Probenplattform 11 bereitgestellt. Mit Hilfe eines automatischen Pipettenarmes 12 lassen sich nun seriell kleine Probenmengen einer Mischkammer 14 zuführen. Die Kammer 14 ist eine oben offene Reaktionsküvette, in welche Einlassöffnungen 15, 16 für Luft bzw. Wasser einmünden zum Homogenisieren der jeweiligen Probenflüssigkeit bzw. zum Spülen der Kammer. Überschüssige Flüssigkeit oder Waschflüssigkeit (waste) lässt sich über eine erste Auslassöffnung 17 absaugen. Über eine zweite Öffnung bzw. eine Verbindungsleitung 21 erreicht die verdünnte Probenflüssigkeit den Messkanal eines Elektrodenblocks 22, der mit Hilfe von Ionen-selektiven Elektroden die Konzentration z. B. der Ionen Li⁺, K⁺, Na⁺, Cl⁻ misst. Die Probenflüssigkeit wird schliesslich zur Vernichtung über einen Auslass 23 ausgestossen.

Der beschriebenen Anordnung ist eine umfangreiche Steuerungs-, Überwachungs- und Auswerteelektronik 24 zugeordnet, die unter anderem die Vorgänge der Probenentnahme aus den Gefässen der Probenplattform 11 und deren Überführung in die Reaktionsküvette oder Mischkammer 14 steuert und überwacht. Dies ist durch die Doppelpfeile 25 bis 27 angedeutet. Diese Elektronik weist programmgesteuerte Mikroprozessoren auf.

Es ist erwünscht, Analysenautomaten der gezeigten Art möglichst störungsfrei zu betreiben. Diesem Bestreben sind jedoch aus verschiedenen Gründen Grenzen gesetzt. Vor allem bereiten immer wieder kleine Partikel, beispielsweise Blutgerinnsel, Schwierigkeiten, da diese die Pipettiernadel und andere Teile des Automaten verstopfen können, was Analysefehler nach sich zieht oder die Messungen gar verunmöglicht. Es wird daher durch überwachende Einrichtungen generell angestrebt, insbesondere die Pipettiervorgänge möglichst effizient zu überwachen. Hierfür eignet sich beispielsweise die Überwachung der Druckverhältnisse beim Einsaugen und Ausstossen der Probenflüssigkeit in die bzw. aus den Pipettiernadeln. Versuche in dieser Richtung sind zum Beispiel aus den Schriften WO 95/00829, US-A-4,794,085, EP-A-0 289 946 und EP-A-0 210 014 bekannt.

Eine weitere bekannte Überwachungsmöglichkeit besteht in der Kontrolle des exakten Eintauchens der Pipettiernadel in die Probenflüssigkeit bei unterschiedlichen Füllhöhen der Gefässe auf der Probenplattform 11 unter Verwendung eines Hochfrequenzfeldes. Hierzu seien beispielsweise die Schriften US-A-5,493,922, EP-A-0 694 784, US-A-5,012,683 und US-A-4,326,851 genannt.

Weitere Überwachungsmöglichkeiten, beispielsweise auf optischer Basis, sind denkbar.

Der Erfindung liegt daher die Aufgabe zugrunde, einen Analysenautomat der eingangs erwähnten Art bereit zu stellen, der insbesondere eine Überwachung von Pipettiervorgängen mit hoher Effizienz ermöglicht. Hierdurch sollen das Gesamtverhalten des Automaten verbessert und Ausfallzeiten und Fehlmessungen vermindert werden.

Diese Aufgabe wird erfindungsgemäss mit einem Analysenautomat gelöst, welcher dadurch gekennzeichnet ist, dass er folgende Komponenten umfasst:
eine Mehrzahl von Ablauf- und Überwachungssteuerungen, die in sich abgeschlossene, voneinander unabhängige Einheiten bilden, die aufgrund von Startbefehlen einer Zentralsteuerung ihre Funktion beginnen und diese mit der Abgabe eines jeweiligen Modussignals an die Zentralsteuerung beenden, und
eine Kombinationslogik, die mit wenigstens zwei der Ablaufund Überwachungssteuerungen verbunden ist, welche Logik jeweils fallweise von diesen Steuerungen abgegebene Meldungen im Sinne eines logischen UND kombiniert und ein dem Kombinationsresultat entsprechendes Modussignal an die Zentralsteuerung abgibt,
wobei in der Zentralsteuerung jedem Modussignal eine entsprechende Reaktion des Analysenautomaten fest zugeordnet ist.

Ausgestaltungen des erfindungsgemässen Analysenautomats sind durch die abhängigen Ansprüche definiert.

Die Vorteile, die mit dem erfindungsgemässen Analysenautomat erzielt werden, lassen sich wie folgt zusammenfassen:

Die erweiterten Steuerungs- und Überwachungsmöglichkeiten die mit dem erfindungsgemässen Analysenautomat erzielt werden, resultieren in einer markanten Verbesserung der Betriebszuverlässigkeit des Automaten. Dies bedeutet, dass weit weniger Ausfälle und Fehlmessungen auftreten als bei den vergleichbaren bisherigen Geräten. Dies ergibt massiv reduzierte Zeit- und Genauigkeitsverluste und mehr Sicherheit in den Untersuchungsaussagen.

Im folgenden werden Ausführungsbeispiele der Erfindung anhand der beiliegenden Figuren näher beschrieben. Es zeigen:
- Figur 1: ein Blockschaltbild eines Analysenautomaten gemäss dem einleitend abgehandelten Stand der Technik,
- Figur 2: ein Flussdiagramm von Abläufen, die mit einem Pipettiervorgang in Beziehung stehen,
- Figur 3: ein Fluss- und Entscheidungsdiagramm von einem Verfahren zur Drucküberwachung in Bezug auf einen Pipettiervorgang zum Ansaugen einer Probe,
- Figur 4: ein Schema für das Zusammenwirken von unabhängigen Flussdiagrammen.

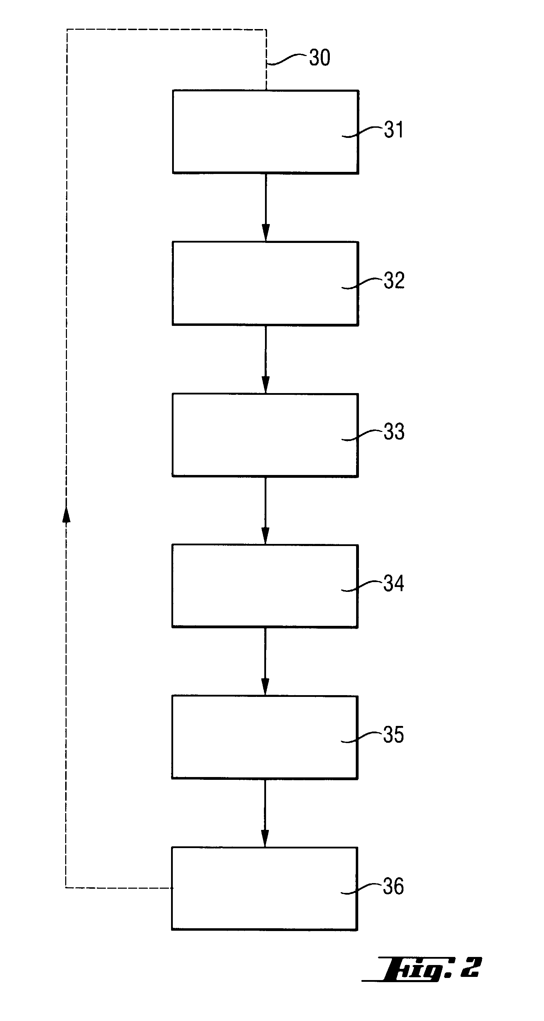

Figur 2 zeigt ein Flussdiagramm von Abläufen 31-36, die zu einem Verfahren zur Entnahme einer Probe aus jeweils einem Gefäss der Probenplattform 11 und zur Weitergabe der entnommenen Probe in die Reaktionsküvette bzw. Mischkammer 14 mittels einer Pipettiervorrichtung gehören. Diese Abläufe 31-36 beginnen aufgrund eines Startbefehls 30 mit dem Ablauf 31, der ein Spülen der Pipettiernadel bewirkt.

Danach folgen:
Ablauf 32, der ein Eintauchen der Spitze der Pipettiernadel in die Probenflüssigkeit bewirkt.
Ablauf 33, der ein Einsaugen von Probenflüssigkeit in die Nadel bewirkt.
Ablauf 34, der ein Transport der Pipettiernadel zur Mischkammer 14 bewirkt.
Ablauf 35, der ein Ausstossen von Probenflüssigkeit aus der Pipettiernadel in das Mischgefäss bewirkt.
Ablauf 36, der ein Rücktransport der Pipettiernadel zu einer Ruhe- bzw. Startposition bewirkt.

Jeder der Abläufe 31-35 schliesst ein Verfahren zu dessen Überwachung ein.

Die Arten der bevorzugten Überwachungssensoren, die den jeweiligen Abläufen 31-35 zur Überwachung zugeordnet sind, sind wie folgt:
- für den Ablauf 31: einen Drucksensor,
- für den Ablauf 32: einen Sensor für Eintaucherkennung,
- für den Ablauf 33: einen Drucksensor,
- für den Ablauf 34: einen Sensor für Eintaucherkennung, rückwirkend,
- für den Ablauf 35: einen Drucksensor oder einen optischen Sensor.

Die Steuerung der Abläufe 31 bis 35 und deren Überwachung erfolgt durch zugeordnete, voneinander unabhängige Ablaufund Überwachungssteuerungen unter Verwendung gespeicherter Daten, insbesondere Schwellwerten, die aus vorausgehenden Messungen und Versuchen mit charakteristischen Flüssigkeiten gewonnen wurden. Hierbei werden generell die jeweils aktuellen Sensorwerte mit den genannten, zugeordneten Schwellwerten verglichen und jeweils entschieden, ob die jeweiligen aktuellen Sensorwerte grösser, gleich oder kleiner als die Schwellwerte sind.

Jeder der Blöcke 31-36 in Fig. 2 stellt sowohl einen der oben definierten Abläufe 31-36 als auch die Mittel zu dessen Durchführung dar.

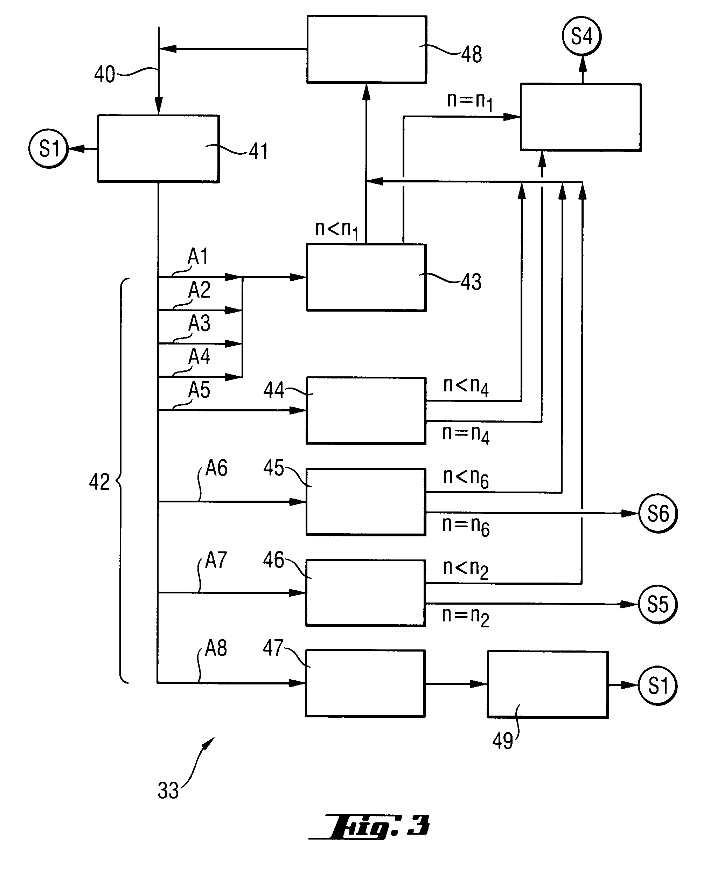

Jedem Ablauf 31 bis 35 bzw. den zugeordneten Ablauf- und Überwachungssteuerungen lässt sich durch ein unabhängiges, mehr oder weniger umfangreiches und komplexes Fluss- und Entscheidungsdiagramm darstellen. Als Beispiel zeigt Figur 3 das Fluss- und Entscheidungsdiagramm von einem Verfahren, das im Ablauf 33 eingeschlossen ist und zur Drucküberwachung in Bezug auf einen Pipettiervorgang zum Ansaugen einer Probe dient.

Das Diagramm gemäss Fig. 3 beginnt aufgrund eines Startbefehls 40 mit dem Abarbeiten des Steuerungsalgorithmus 41. Hierdurch wird die Pipettiernadel mit relativ hoher Geschwindigkeit zum jeweiligen Probengefäss bewegt und anschliessend gesteuert in die Probenflüssigkeit eingetaucht. Danach wird Probenflüssigkeit in die Nadel eingesaugt und die Nadel wieder aus der Probenflüssigkeit herausgezogen. Hierbei treten bei der überwachenden Druckmessung die Druckwerte P₁, P₂, P_{3,} P₄ auf. Diese unterschiedlichen Druckwerte beruhen z. B. auf Beschleunigungskräften auf die Flüssigkeiten im Dosiersystem und auf Fluidwiderständen, insbesondere beeinflusst durch den Flüssigkeitsanteil in der Pipettiernadel.

Liegen die Druckwerte P₁ bis P₄ richtig bezüglich der zugeordneten, gespeicherten Schwellwerte, dann wird das Modussignal S1 abgegeben, welches das Ergebnis "kein Fehler" bedeutet. Anderenfalls liegen eine oder mehrere Abweichungen A1 bis A8 vor. Diese Abweichungen beruhen auf unterschiedlichen Ursachen. Sinkt beispielsweise der Druck während der Bewegung der Pipettiernadel unter eine vorbestimmte Schwelle, so kann eine teilweise oder eine vollständige Verstopfung der Nadel die Ursache sein. Liegt der Druck dagegen während der gesamten Bewegung der Nadel auf Umgebungsdruck, dann kann dies auf einem massiven Leck oder einer Nichtbewegung wegen eines Motorausfalls beruhen. Weitere Abweichungen ergeben sich beispielsweise durch das Ausbleiben einer Druckentspannung nach dem Ansaugen der Flüssigkeit in die Pipettiernadel und vor dem Auftauchen derselben aus der Flüssigkeit.

Aufgrund von Erfahrungen wird bei den meisten Abweichungen A1 bis A7 mit der Behebbarkeit der Fehlerursache durch Wiederholung des jeweiligen Vorgangs gerechnet. Es wird daher bei den Fehlervermutungen 43 bis 47 jeweils ein erneutes Pipettieren 48 verlangt. Dies bedeutet jeweils einen Neustart 40. Ergeben sich hierdurch nun Druckwerte P₁ bis P₄ im gewünschten Rahmen, dann wird das Modussignal S1 abgegeben. Im anderen Fall ergeben sich nach n₁, n₂, n₄ bzw. n₆ Wiederholungen Modussignale S4, S5 oder S6, die dann konkrete Fehler anzeigen, wobei beispielsweise gilt: n₁ = 3; n₂ = 3; n₄ = 3; n₆ = 2.

### Modussignal S4 entspricht z.B. möglicherweise einer Störungs des Transfers

Fehlervermutung 43 wird z.B. durch Fehler A1, Fehler A2, Fehler A3 oder Fehler A4 ausgelöst.

Fehlervermutung 44 wird z.B. durch Fehler A5 ausgelöst.

Fehlervermutung 45 wird z.B. durch Fehler A6 ausgelöst.

Fehlervermutung 46 wird z.B. durch Fehler A7 ausgelöst.

Fehlervermutung 47 wird z.B. durch Fehler A8 ausgelöst.

Bei der Abweichung A8 handelt es sich um einen Grenzfall, so dass ein Fehler nur mit "geringer Wahrscheinlichkeit" 49 vorliegt. In diesem Fall wird das Modussignal S1 ausgegeben, das ein ungestörtes Weiterarbeiten des Analysenautomaten 10 bewirkt.

Für den Analysenautomat 10 sind insgesamt sieben unterschiedliche Modussignale S1 bis S7 definiert. Tabelle 1 gibt für diese Signale, den zugeordneten Status des Automaten und die jeweilige Reaktion der Steuerung bzw. des Apparates an. Die Modussignale S1 bis S7 sind damit im Grunde Schnittstellenbefehle, die ein Zusammenwirken der oben erwähnten Überwachungsverfahren ermöglichen, die - wie oben erwähnt - voneinander unabhängig sind.

**Tabelle 1**

| **Modussignal** | **Status (vereinfacht)** | **Reaktion** |
|---|---|---|
| S1 | Ablauf einwandfrei; kein Fehler detektiert | Ablauf ohne Fehler abschliessen; Übergang zum nächsten Ablauf |
| S2 | **Bei initialisiertem Automat:** Fehler mit Detektionssystem festgestellt; Vorgang nicht korrekt beendet | Ablauf mit Fehlermeldung abschliessen; Übergang zum nächsten Ablauf |
| S3 | **Bei initialisiertem Automat:** Detektionssystem ausgeschaltet oder Fehler mit Detektionssystem festgestellt; Ablauf nicht korrekt beendet; Detektionssystem bleibt eingeschaltet | Fehlermeldung; Abbruch des Ablaufs des Ablaufs |
| S4 | **Im Run-Modus:** Fehler am Detektionssystem | Stopp nach Abarbeitung der pipettierten Probe |
| S5 | n-mals gleicher Fehler | Ausschaltung der betreffenden Probe; Fehlermeldung |
| S6 | n-mals gleicher Fehler | Ausschaltung des betreffenden Cups, Fehlermeldung |
| S7 | Reduzierte Aussagesicherheit | Ausgabe eines Resultat Flags |

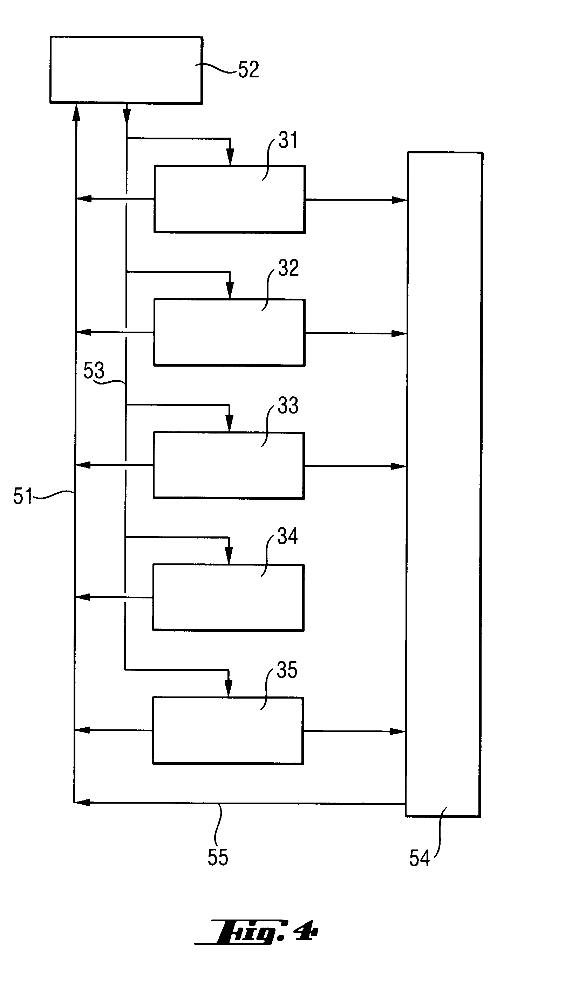

Figur 4 zeigt ein Schema des Zusammenwirkens der voneinander unabhängigen Abläufe 31-35. Die Zusammenwirkung dieser Abläufe bildet einen gesamtheitlichen Plausibilitätsstest (overall plausibility check). Dieser Test dient im Falle einer Aussage mit beschränkter Aussagesicherheit, z. B. "vermutlich wurde beim Ausstossen der Probenflüssigkeit aus der Pipettiernadel in die Küvette 14 eine Luftblase mit ausgestossen", zum Gewinnen einer besser fundierten Aussage bzw. zum Gewinnen eines eindeutigen Modussignals S1 bis S7. Das Schema zeigt die Abläufe bzw. die entsprechenden Ablaufund Überwachungssteuerungen 31 bis 35 entsprechend Figur 2. In Übereinstimmung mit Figuren 3 und 4 wird das Ende jedes Ablaufs dadurch gegeben, dass jeweils ein Modussignal S1 bis S7 über eine Verbindung 51 an eine Zentralsteuerung 52 abgegeben wird. Diese gibt als Antwort jeweils ein Startsignal über eine zweite Verbindung 53 an den in der Reihenfolge jeweils nächstfolgenden Ablauf 32 bis 35 ab. Die Abläufe 31 bis 35 geben bei Abweichungen 42 entsprechende Meldungen an eine Kombinationslogik 54 ab. Diese kombiniert diese Meldungen im Sinne eines logischen UND und gewinnt hierdurch entweder eine sichere OK-Meldung oder eine Fehlermeldung, welche Meldung als Modussignal S1 bis S7 über den Ausgang 55 auf die Verbindung 51 abgegeben wird. Es gelingt hierdurch vor allem in Zweifelsfällen eindeutige Befehle und Aussagen zu gewinnen, die rasch ein objektives Handeln ermöglichen.

Die in Figur 2 angegebenen Drucksensoren zur Überwachung der Abläufe 31, 33, 35 sind mit dem Können des Fachmannes funktionsgerecht auswähl- und im Automaten 10 geeignet plazierbar. Die Eintaucherkennung zur Überwachung des Ablaufs 32 besitzt vor allem die Eigenschaft, eventuell über der zu pipettierenden Probenflüssigkeit befindlichen Schaum mitzudetektieren, was die Gefahr des Einsaugens von Blasen in die Pipettiernadel wesentlich vermindert. Der optische Sensor zur Überwachung des Ablaufs 35 lässt sich als quer zur Ausstossrichtung der Flüssigkeit orientierte Lichtschranke ausbilden, die die unterschiedliche Reflexion bei Blasen und Flüssigkeit ausnützt.

Die Ablauf- und Überwachungssteuerungen 31 bis 35 entsprechend Figur 4 bilden in sich abgeschlossene, voneinander unabhängige Einheiten. Jeweils eine dieser Einheiten lässt sich durch einen gezielten Startbefehl in Funktion setzen. Sie arbeitet hierauf ihre Aufgabe ab und gibt zum Schluss als Endemeldung eines der Modussignale S1 bis S7 an die Zentralsteuerung 52 ab. Hierbei ist die Anzahl der Abläufe frei wählbar. Diese Anzahl kann somit grösser oder kleiner als die in Figur 4 gezeigte Zahl fünf sein. Weiter ist die Art und Weise des inneren Aufbaus der Ablaufund Überwachungssteuerungen 31 bis 35 frei gestaltbar. Dieser Aufbau kann als diskreter elektronischer Steuerkreis gestaltet sein. Bevorzugt ist jedoch ein Aufbau als in sich abgeschlossenes Programm für einen programmgesteuerten Prozessor.

Die Anzahl der Modussignale S1 bis S7 ergibt sich aus praktischen Überlegungen als sieben. Diese Anzahl kann jedoch problemlos grösser oder kleiner als sieben sein. Wichtig ist dabei die möglichst eindeutige Definition der zugeordneten Stati und der Reaktionen des Automaten, die allen denkbaren Fehlern gerecht werden müssen.

Zusammenfassend wurde oben ein Analysenautomat 10 beschrieben für die Untersuchung von Flüssigproben. Dieser Analysenautomat umfasst einen Pipettenarm 12 zum Entnehmen von Probenflüssigkeit aus jeweils einem Probengefäss und zum Abgeben dieser Probenflüssigkeit in eine Reaktionsküvette 14, und Mittel zum Steuern des Automaten, Sensoren zum Überwachen der Funktionen des Automaten und Mittel zum Auswerten von Überwachungsergebnissen und zum Abgeben eventueller Fehlermeldungen, wobei diese Mittel wenigstens einen programmgesteuerten Prozessor umfassen.

Das soeben erwähnte Analysenautomat umfasst ferner eine Mehrzahl von Ablauf- und Überwachungssteuerungen 31 bis 35, die in sich abgeschlossene, voneinander unabhängige Einheiten bilden, die aufgrund von Startbefehlen einer Zentralsteuerung 52 ihre Funktion beginnen und diese mit der Abgabe eines jeweiligen Modussignals S1 bis S7 an die Zentralsteuerung 52 beenden, und eine Kombinationslogik 54, die mit wenigstens zwei der Ablauf- und Überwachungssteuerungen 31 bis 33, 35 verbunden ist, welche Logik jeweils fallweise von diesen Steuerungen 31 bis 33, 35 abgegebene Meldungen im Sinne eines logischen UND kombiniert und ein dem Kombinationsresultat entsprechendes Modussignal S1 bis S7 an die Zentralsteuerung 52 abgibt, wobei in der Zentralsteuerung 52 in Art einer Befehlsliste jedem Modussignal S1 bis S7 eine entsprechende Reaktion des Analysenautomaten 10 fest zugeordnet ist.

Es ist für den Fachmann aufgrund der obigen Beschreibung klar, dass zahlreiche Varianten und Änderungen der oben beschriebenen Ausführungsformen möglich sind, die alle aber innerhalb der erfindungsgemässen Lösung gemäss den beiliegenden Patentansprüchen liegen.

## Patentansprüche

1. Analysenautomat für die Untersuchung von flüssigen Proben, umfassend
einen Pipettenarm (12) zum Entnehmen von Probenflüssigkeit aus jeweils einem Probengefäss und zum Abgeben dieser Probenflüssigkeit in eine Mischkammer oder Reaktionsküvette (14), und
Mittel zum Steuern des Automaten, Sensoren zum Überwachen der Funktionen des Automaten und Mittel zum Auswerten von Überwachungsergebnissen und zum Abgeben eventueller Fehlermeldungen, wobei diese Mittel wenigstens einen programmgesteuerten Prozessor umfassen, welcher Analysenautomat dadurch gekennzeichnet ist, dass er folgende Komponenten umfasst
eine Mehrzahl von Ablauf- und Überwachungssteuerungen (31 bis 35), die in sich abgeschlossene, voneinander unabhängige Einheiten bilden, die aufgrund von Startbefehlen einer Zentralsteuerung (52) ihre Funktion beginnen und diese mit der Abgabe eines jeweiligen Modussignals (S1 bis S7) an die Zentralsteuerung (52) beenden, und
eine Kombinationslogik (54), die mit wenigstens zwei der Ablauf- und Überwachungssteuerungen (31 bis 33, 35) verbunden ist, welche Logik jeweils fallweise von diesen Steuerungen (31 bis 33, 35) abgegebene Meldungen im Sinne eines logischen UND kombiniert und ein dem Kombinationsresultat entsprechendes Modussignal (S1 bis S7) an die Zentralsteuerung (52) abgibt,
wobei in der Zentralsteuerung (52) jedem Modussignal (S1 bis S7) eine entsprechende Reaktion des Analysenautomaten (10) fest zugeordnet ist.

2. Analysenautomat nach Anspruch 1,
dadurch gekennzeichnet,
dass wenigstens vier Ablauf- und Überwachungssteuerungen (31 bis 35) vorgesehen sind,
von denen die erste (31) das Spülen einer Pipettiernadel betrifft,
von denen die zweite (32) das gezielte Eintauchen der Pipettiernadel in eine Flüssigkeit betrifft,
von denen die dritte (33) das Einsaugen von Flüssigkeit in die Pipettiernadel betrifft, und
von denen die vierte (35) das Ausstossen der eingesaugten Flüssigkeit aus der Pipettiernadel betrifft,
wobei die gesteuerten Abläufe durch wenigstens einen Drucksensor und durch einen Eintauchsensor überwacht werden.

3. Automat nach Anspruch 2,
dadurch gekennzeichnet,
dass zusätzlich ein optischer Sensor vorgesehen ist zum Überwachen des Ablaufs "Ausstossen der eingesaugten Flüssigkeit aus der Pipettiernadel".

4. Automat nach Anspruch 1,
dadurch gekennzeichnet,
dass sieben verschiedene Modussignale (S1 bis S7) und zugeordnet eine entsprechende Zahl von Reaktionen des Automaten (10) vorgesehen sind.

5. Automat nach Anspruch 1,
dadurch gekennzeichnet,
dass die Ablauf- und Überwachungssteuerungen (31 bis 35) und die Kombinationslogik (54) als diskrete elektronische Schaltkreise aufgebaut sind.

6. Automat nach Anspruch 1,
dadurch gekennzeichnet,
dass die Ablauf- und Überwachungssteuerungen (31 bis 35) und die Kombinationslogik (54) als in sich abgeschlossene Programme eines übergeordneten Steuerungsprogramms für einen programmgesteuerten Prozessor ausgebildet sind.
